Europäisches Patentamt

European Patent Office

Office européen des brevets

(11) Veröffentlichungsnummer: **0 285 627**
**B1**

(12) **EUROPÄISCHE PATENTSCHRIFT**

(45) Veröffentlichungstag der Patentschrift: **19.09.90**

(51) Int. Cl.⁵: **F 21 V 21/30, F 21 S 1/08**

(21) Anmeldenummer: **87906420.2**

(22) Anmeldetag: **02.10.87**

(86) Internationale Anmeldenummer:
**PCT/EP87/00566**

(87) Internationale Veröffentlichungsnummer:
**WO 88/02460 07.04.88 Gazette 88/08**

(54) **LEUCHTENANORDNUNG MIT ZWISCHEN ZWEI NIEDERSPANNUNGS-STROMLEITERN ANGEORDNETEN LEUCHTEN.**

(30) Priorität: **03.10.86 DE 3633729**
**13.01.87 DE 8700563 u**

(43) Veröffentlichungstag der Anmeldung:
**12.10.88 Patentblatt 88/41**

(45) Bekanntmachung des Hinweises auf die
Patenterteilung:
**19.09.90 Patentblatt 90/38**

(84) Benannte Vertragsstaaten:
**AT BE CH DE FR GB IT LI LU NL SE**

(56) Entgegenhaltungen:
**DE-U-8 602 831**
**GB-A- 680 114**
**US-A-3 748 463**

(73) Patentinhaber: **GRAU, Tobias**
**Lippmannstrasse 72-74**
**D-2000 Hamburg 50 (DE)**

(72) Erfinder: **GRAU, Tobias**
**Lippmannstrasse 72-74**
**D-2000 Hamburg 50 (DE)**

(74) Vertreter: **Schmidt-Bogatzky, Jürgen, Dr. Ing.**
**et al**
**Schlossmühlendamm 1**
**D-2100 Hamburg 90 (DE)**

Courier Press, Leamington Spa, England.

**Beschreibung**

Die Erfindung betrifft eine Leuchtenanordnung mit zwischen zwei Niederspannungs-Stromleitern angeordneten Leuchten, insbesondere Strahlern, wobei die parallel zueinander angeordneten als Seile, Kabel oder Drähte ausgebildeten Stromleiter mit Haltevorrichtungen gehalten sind und die Leuchten mit den Stromleitern mittels zweier elektrisch leitender Tragstücke elektrisch leitend mittels an den Enden oder Tragstücke ausgebildeter Haltestücke verbunden sind. Eine solche Leuchtenanordnung ist aus DE—U—86 02 831 bekannt.

Bei Leuchten einer anderen Leuchtenanordnung mit zwischen zwei Niederspannungs-Stromleitern angeordneten Leuchten ist es bekannt zwischen den Stromleitern stegartige Platten vorzusehen, die mittels Schraubverbindungen miteinander verbunden und hierbei an den Stromleitern festgeklemmt werden. Der Strahler selbst ist an den Platten befestigt und wird über ein besonderes Kabel mit Strom von den Stromleitern versorgt. Diese bekannte Leuchte ist relativ umständlich zu montieren und hinsichtlich ihrer Strahleinrichtung einzustellen. Darüberhinaus wirken die stegartigen Platten optisch störend, da sie gegenüber den Stromleitern einen verhältnismäßig ungefügen Eindruck vermitteln. Ferner müssen die Stromleiter hierbei jeweils über eine gerade Strecke zwischen zwei einander entgegengesetzten Halteflächen wie z.B. Wänden verspannt werden. Dieses hat den Nachteil, daß bei einer großflachigen Raumausleuchtung mehrere Stromleiterpaare erforderlich sind, für die jeweils ein Niederspannungstransformator vorgesehen werden muß. Ferner sind relativ viele Spann- und Befestigungsmittel erforderlich, so daß die Montage verhältnismäßig zeit- und kostenaufwändig ist.

Die Aufgabe der Erfindung besteht darin, eine Leuchtenanordnung der eingangs genannten Art so auszubilden, daß sie leicht zu montieren und einzustellen ist, wobei die Strahler sich optisch an die Stromleiter anpassen und besondere Stromkabel für die Strahler nicht eforderlich sein sollen und ferner mittels einer geeigneten Haltevorrichtung eine Richtungsumlenkung der Stromleiter ein Bereich der Halteflächen zwischen Umlenkwinkeln kleiner Große bis zu einem Umlenkwinkel von 180° einstellbar ist.

Erfindungsgemäß erfolgt die Lösung der Aufgabe dadurch, daß an der Lampenfassung radial zu deren Längsachse diametral einander entgegengesetzt zwei Stromleitstäbe angeordnet sind, die innerhalb der Lampenfassung mit den Kontakten der Birne und an ihren äußeren Endabschnitten gelenkig mit jeweils einem Ende der stabförmigen elektrisch leitenden Tragstücke verbunden sind, wobei die Haltestücke jeweils an den anderen Enden der Tragstück so befestigt und mit den Stromleitern so verbindbar sind daß die Tragstücke um Drehachsen senkrecht zur Längsachse der Stromleitstäbe schwenkbar sind, wobei die Haltestücke derart jeweils und daß eine Haltevorrichtung zwei Umlenksegmente mit jeweils einer Führung für ein Seil, Kabel oder Draht umfaßt, die mittels einer Halteeinrichtung miteinander verbunden sind und mittels eines Deckenhalters oder mittels mindestens eines Haltearms gelenkig mit einem Wandhalter verbunden sind. Durch die so erhaltene kardanische Aufhängung der Leuchte zwischen den Stromleitern ist sichergestellt, daß jede Leuchte hinsichtlich der Lichtstrahleinrichtung beliebig eingestellt werden kann. Ferner vermittelt die erfindungsgemäße Leuchte, insbesondere dann, wenn mehrere Leuchten eingesetzt werden, in Verbindung mit den Stromleitern einen besonderen filigranen Eindruck, der es ermöglicht, die Lampen außer zu Ausleuchtungszwecken auch als gestalterisches Mittel in geschlossenen Räumen einzusetzen.

Weitere Merkmale der Erfindung werden in den abhängigen Ansprüchen beschrieben und nachstehend anhand der in den Zeichnungen dargestellten Ausführungsformen näher erläutert. Es zeigt

Fig. 1 einen Ausschnitt aus einer erfindungsgemäßen Leuchtenanordnung in einer schematischen perspektivischen Ansicht,

Fig. 2 einen Strahler zwischen zwei Stromleitern in einer schaubildlichen Ansicht,

Fig. 3a bis 3d ein Haltestück des Strahlers nach Fig. 2 in schiedenen Ansichten,

Fig. 4a und 4b eine Haltebuchse für die Tragstücke des Strahlers in einer Seitenansicht und Queransicht,

Fig. 5 und 6 eine abgewandelte Ausführung eines Strahlers in schematischen Seitenansichten,

Fig. 7 den Strahler nach Fig. 5 in einer schematischen Draufsicht,

Fig. 8 bis 10 die Lampenfassung des Strahlers in Seitenansichten und einer Draufsicht,

Fig. 11 den Tragrahmen des Strahlers in einer schematischen Draufsicht,

Fig. 12 und 13 den Tragrahmen nach Fig. 11 in zwei Seitenansichten,

Fig. 14 die Haltevorrichtung in einer perspektivischen Ansicht,

Fig. 15 die Haltevorrichtung nach Fig. 14 in einer Draufsicht,

Fig. 16 die Haltevorrichtung nach Fig. 14 in einer Seitenansicht im teilweisen Schnitt,

Fig. 17 die Umlenkeinrichtung der Haltevorrichtung in einer vergrößerten Seitenansicht im Schnitt,

Fig. 18 und 19 weitere Ausbildungen einer Umlenkeinrichtung in perspektivischen Ansichten,

Fig. 20 ein Vorschaltgerät mit einem Deckenhalter in einer Seitenansicht,

Fig. 21 einen Deckenhalter mit einem Seilspanner in einer Seitenansicht.

Die Leuchtenanordnung 100 besteht aus zwei parallel zueinander angeordneten Niederspannungs-Stromleitern 2, 3 und mit diesen verbundenen Leuchten 1 sowie einer Abhängeleuchte 50. Die Lampenfassung 4 der Leuchten 1 sind mittels Stromleitstäben 6, 7 mit als Viertelkreis ausgebildeten stabförmigen Tragstücken 12, 13 mit den Niederspannungs-Stromleitern 2, 3 verbunden. Bei der Abhängeleuchte 50 ist die Leuchte 1 mittels Stromleitstäben 6, 7 mit Stromleitstangen 90 verbunden, die jeweils mittels eines Haltestücks 91 mit einem der Niederspannungs-Stromleiter 2, 3 verbunden sind. Die Stromleitstäbe 6, 7 sind mit der Lampenfassung 4 verbunden. Vor der Strahlerfassung 42 der Abhängeleuchte 50 ist im Abstand eine Blendschutzplatte 93 angeordnet. Die Umlenkung der Niederspannungs-Stromleiter 2, 3 erfolgt im Bereich einer Haltevorrichtung 51 mittels Umlenksegmenten 52, 53. An dem einen Endabschnitt der Niederspannungs-Stromleiter 2, 3 sind diese mit einem einen Trafo aufweisenden Vorschaltgerät 49 verbunden, das mittels Seilspannern 92 mit einem nicht näher dargestellten Halter verbunden ist. Je nach gewünschter Umlenkung der Niederspannungs-Stromleiter 2, 3 kann das als Umlenksegment 53 dienende Kreissegment einen unterschiedlich großen Öffnungswinkel haben.

Sofern die Leuchtenanordnung 100 als raumgestalterisches Element verwendet werden soll, ist es von Vorteil, an den Niederspannungs-Stromleitern 2, 3 eine Vielzahl von Leuchten 1 und gegebenenfalls Abhängeleuchten 50 vorzusehen, die in ihrer Gesamtheit dann den Eindruck eines filigranen Leuchtennnetzes vermitteln.

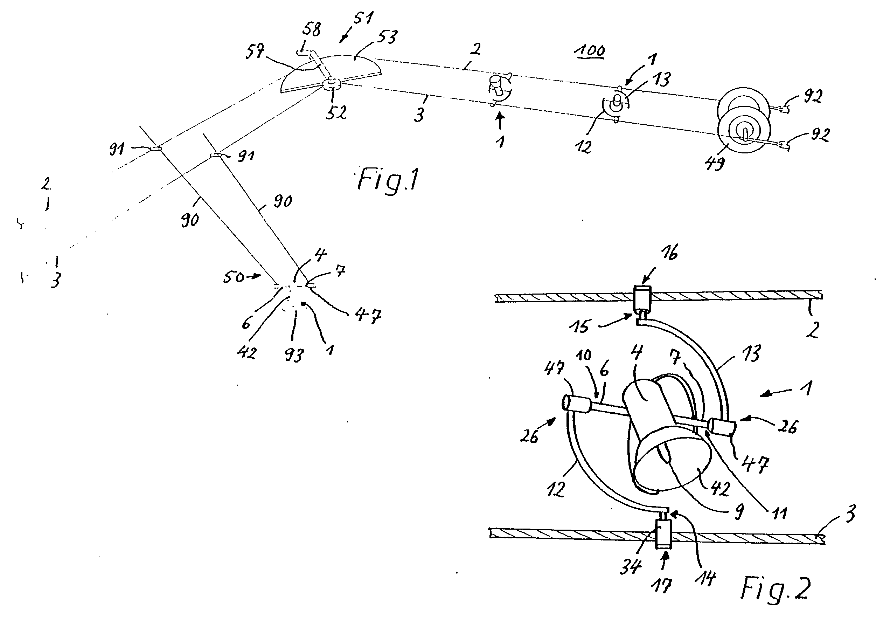

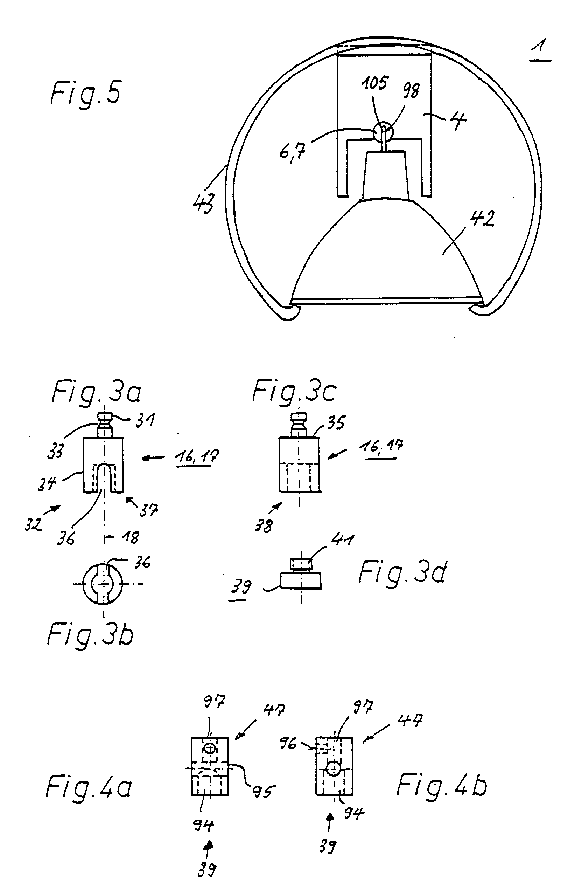

Die in Fig. 2 dargestellte Leuchte 1 besteht aus einer Lampenfassung 4, an der eine Strahlerfassung 42 mit einer Birne 9 angeordnet ist. Die Strahlerfassung 42 ist mittels eines Klemmbügels 43 an der Lampenfassung 4 befestigt. An dieser sind radial zur Längsachse 5 der Lampenfassung 4 diametral einander entgegengesetzt zwei Stromleitstäbe 6, 7 angeordnet, die an ihren äußeren Endabschnitten 10, 11 gelenkig mit jeweils einem stabförmigen elektrisch leitenden Tragstück 12, 13 verbunden sind. Jedes Tragstück 12, 13 bildet einen Viertelkreis. An den den Stromleitstäben 6, 7 abgewandten Endabschnitten 14, 15 sind die Tragstücke 12, 13 jeweils mit einem Haltestück 16, 17 verbunden, das an den Tragstücken 12, 13 drehbar angeordnet ist. Die Haltestücke 16, 17 sind mit den Niederspannungs-Stromleitern 2, 3 verbunden. Jedes Haltestück 16, 17 besteht aus einem Zylinder 34, an dessen einer Stirnseite 35 jeweils ein Lagerzapfen 31 angeordnet ist. Quer zur Längsachse 18 des Haltestücks 16, 17 ist eine Durchbrechung 36 derart ausgebildet, daß der dem Lagerzapfen 31 abgewandte Abschnitt 32 des Zylinders 34 ein einseitig offenes Gabelstück 37 darstellt. Der Öffnungsabschnitt 38 dieses Gabelstücks 37 ist mittels eines Verschlußstücks 39 verschließbar. Das Verschlußstück 39 ist als Verschlußkappe 40 ausgebildet, an der ein Gewindezapfen 41 vorgesehen ist. Mittels des Gewindezapfens 41 kann die Verschlußkappe 40 zum Verschließen des Öffnungsabschnitts 38 in den Zylinder 34 eingeschraubt werden. Hierbei dient der Gewindezapfen 41 as Klemmglied, mit dem der Halter 16, 17 an einem Stromleiter 2, 3 festgeklemmt werden kann (Fig. 3a—3d). Das Zusammenwirken der an den Endabschnitten 15, 26 der Tragstücke 12, 13 ausgebildeten Drehgelenke bewirkt somit eine kardanische Aufhängung der Lampenfassung 4, wodurch die Strahlrichtung der Leuchte 1 beliebig einstellbar ist.

An den Endabschnitten 10, 11 der Stromleitstäbe 6, 7 ist jeweils eine um die Stromleitstäbe 6, 7 drehbare Haltebuchse 47 gelagert, die mit den Endabschnitten 26 der Tragstücke 12, 13 verbunden ist. In jeder Haltebuchse 47 ist quer zu deren Längsachse eine Durchgangsbohrung 95 ausgebildet, durch die der jeweils äußere Endabschnitt 26 des Tragstücks 12, 13 geführt ist. Mittels eines Verschlußstücks 39 kann das jeweilige Tragstück 12, 13 in der Durchgangsbohrung 95 festgeklemmt werden. Koaxial zur Längsachse der Haltebuchse 47 ist eine weitere Ausnehmung 97 für die Stromleitstäbe 6, 7 ausgebildet. Die Stromleitstäbe 6, 7 können in diesen Ausnehmungen 97 mittels Klemmschrauben festgeklemmt werden, die durch Gewindebohrungen 96 in dem Verschlußstück 39 geführt werden (Fig. 4a und 4b).

Durch Verbindung jeweils eines Haltestücks 16, 17 mit einer Haltebuchse 47 kann ein Haltestück 91 gebildet werden, das zur Halterung einer Stromleitstange 90 an einem Niederspannungs-Stromleiter 2, 3 dient. Hierzu wird der Lagerzapfen 31 des Zylinders 34 in die Ausnehmung 97 der Haltebuchse 47 gesteckt und mittels einer Schraube festgeklemmt, die in die Gewindebohrung 96 eingeschraubt wird. Die Durchbrechung 36 des Zylinders 34 dient wieder zur Aufnahme eines Niederspannungs-Stromleiters 2, 3, während in der Durchgangsbohrung 95 der Haltebuchse 47 eine Stromleitstange 90 festgeklemmt wird.

In den Fig. 5 bis 7 ist die Leuchte 1 schematisch dargestellt. In der Lampenfassung 4 sind einander entgegengesetzt zwei Sacklöcher 8 ausgebildet, die zur Aufnahme jeweils eines Stromleitstabs 6, 7 dienen. Im unteren Bereich der Lampenfassung 4 ist ferner eine Ausnehmung 106 derart ausgebildet, daß die in die Sacklöcher 8 eingeführten Endabschnitte der Stromleitstäbe 6, 7 nach unten frei liegen. In den Endabschnitten der Stromleitstäbe 6, 7 ist ferner jeweils ein nach unten offenes Sackloch 98 ausgebildet, in das ein Kontakt 105 der Birne 9 der Leuchte 1 eingeführt wird (Fig. 5, 6, 8). An den in die Lampenfassung 4 eingeführten Endabschnitten der Stromleitstäbe 6, 7 ist jeweils eine Nut 45 ausgebildet. In dieser Nut 45 ist jeweils eine Nut 45 ausgebildet. In dieser Nut 45 ist ein Stift 46 geführt, der den jeweiligen Stromleitstab 6, 7 in der Lampenfassung 4 gegen Verrutschen sichert (Fig. 8). Statt eines Stiftes 46 kann auch eine Schraube od. dgl. verwendet werden. Es ist auch möglich, an den Endabschnitten der Stromleitstäbe 6, 7 keine Nut 45 auszubilden und die Endabschnitte eines jeden Stromleitstabes 6, 7 in dem betreffenden Sackloch 8 der Lampenfassung 4 einzukleben. In diesem Fall sind Stifte 46 nicht erforderlich.

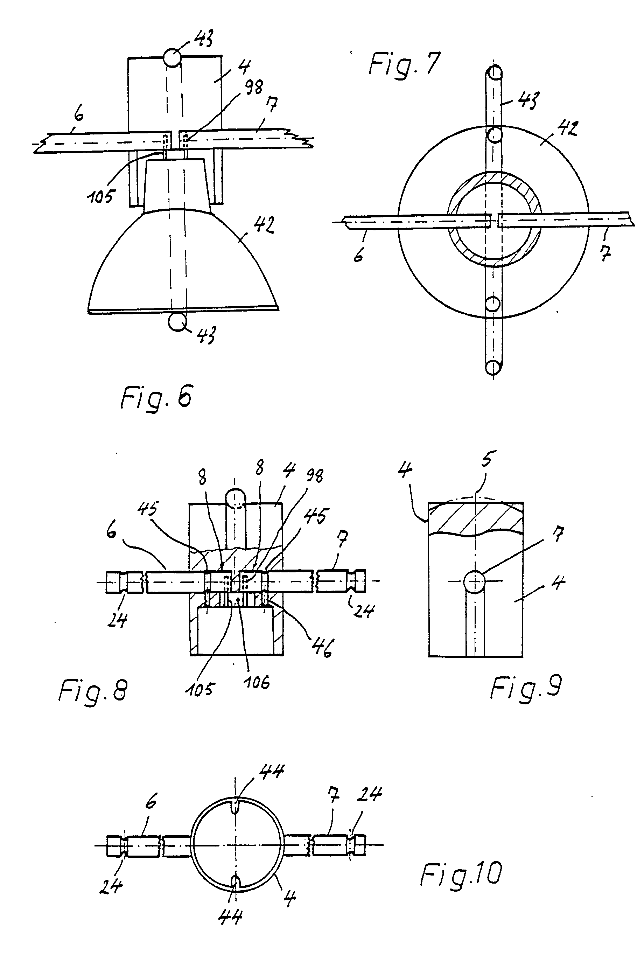

Wie aus Fig. 5 und 10 ersichtlich, wird der Klemmbügel 43 in Führungsnuten 44 geführt, die an der der Strahlerfassung 42 abgewandten Seite der Lampenfassung 4 ausgebildet sind. Diese Führungsnuten 44 verhindern ein seitliches Abrutschen des Klemmbügels 43. Der Klemmbügel 43 preßt die Kontakte 105 der Birne 9 über die Strahlfassung 42 in das jeweilige Sackloch 98, so daß stets ein sicherer Stromkontakt zu dem betreffenden Stromleitstab 6, 7 gewährleistet ist.

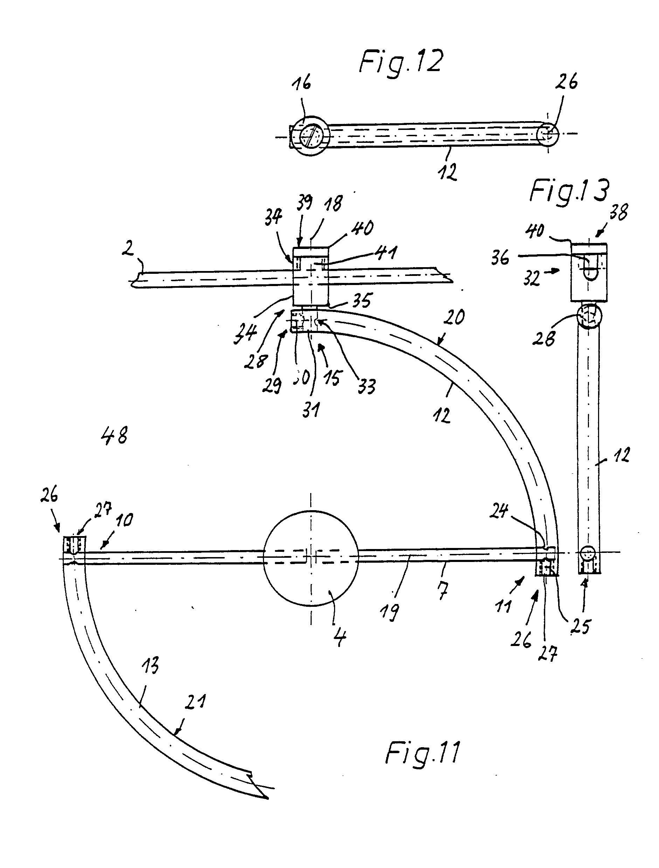

In den Fig. 11 bis 13 ist eine weitere Ausbildung eines Tragrahmens der Lampe 1 schematisch in einer vergrößerten Darstellung abgebildet. Jedes Tragstück 12, 13 ist als einen Winkel von 90° umfassendes Kreisringsegment 20, 21 ausgebildet. An den in das Tragstück 12, 13 eingeführten Endabschnitten 22, 23 der Stromleitstäbe 6, 7 befindet sich jeweils eine Nut 24, mit der eine in dem Tragstück 12, 13 angeordnete Schraube 25 in Wirkeingriff ist. Hierzu ist stirnseitig an den den Stromleitstäben 6, 7 zugewandten Endabschnitten 26 der Tragstücke 12, 13 jeweils eine Gewindebohrung 27 ausgebildet, in die die Schraube 25 eingeschraubt ist. In dem stirnseitigen dem Haltestück 16, 17 zugewandten Abschnitt 28 des Tragstücks 12, 14 ist ebenfalls eine Gewindebohrung 29 ausgebildet. In dieser befindet sich eine Schraube 30, die an dem in das Tragstück 12, 13 eingeführten Lagerzapfen 31, 32 des Haltestücks 16, 17 zur Anlage bringbar ist. An den Haltezapfen 31, 32 ist jeweils eine Nut 33 vorgesehen, an die die in der Gewindebohrung 29 befindliche Schraube 30 zur Anlage gebracht werden kann.

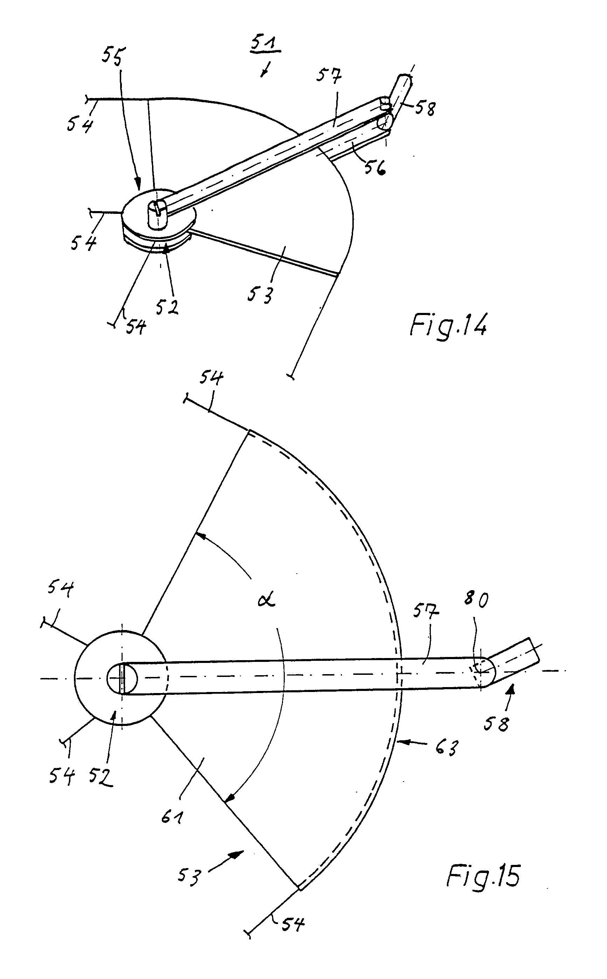

Die in Fig. 14 und 15 dargestellte Haltevorrichtung 51 besteht aus zwei Umlenksegmenten 52, 53, über die jeweils ein Kabel 54 als Stromleiter 2, 3 geführt ist. Die Umlenksegmente 52, 53 sind mittels einer Halteeinrichtung 55 miteinander verbunden. Die Halteeinrichtung 55 ist mittels zweier Haltearme 56, 57 gelenkig mit einem Wandhalter 58 verbunden. Dieser kann z.B. an einer Wand 85 befestigt sein.

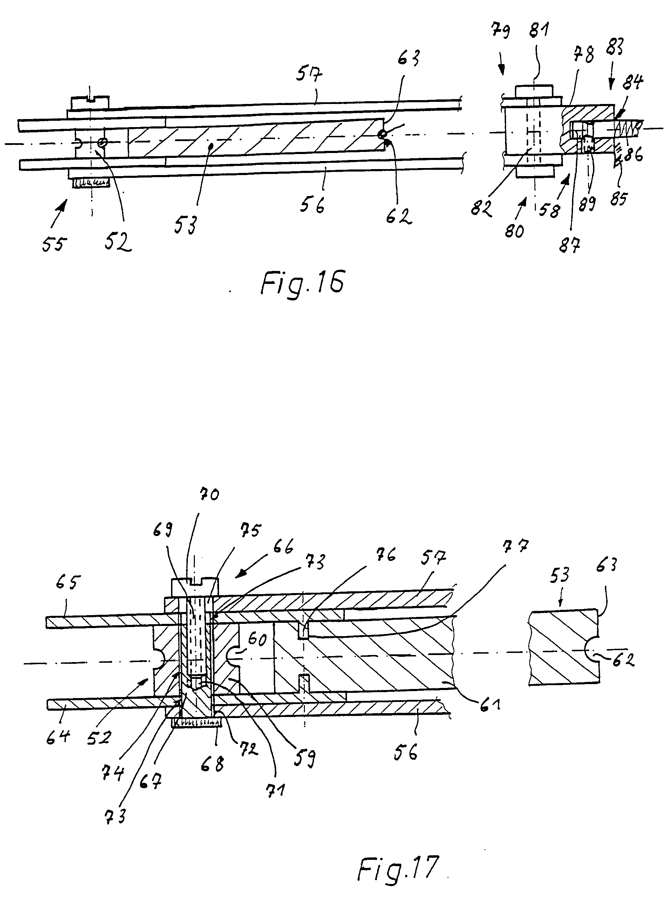

Die Umlenkeinrichtung der Haltevorrichtung 51 ist in Fig. 17 näher dargestellt. Das eine Umlenksegment 52 ist als Buchse 59 mit einer äußeren umlaufenden Nut 60 zur Führung eines Kabels 54 ausgebildet. Das andere Umlaufsegment 53 ist als kreissegmentförmige Scheibe 61 mit einer Nut 62 in der äußeren Bogenfläche 63 ausgebildet. Die Umlenksegmente 52, 53 sind mittels Klemmscheiben 64, 65 miteinander verbunden und mittels einer Schraubverbindung 66 an den beiden Haltearmen 56, 57 befestigt. Die Schraubverbindung 66 besteht aus einer Gewindemuffe 67 mit einem Anschlagflansch 68 und einer in die Gewindemuffe 67 einschraubbaren Schraube 69 mit einem Schraubenkopf 70. Die Gewindemuffe 67 ist durch eine Durchbrechung 72 des unteren Haltearms 56, Durchbrechungen 73 in den Klemmscheiben 64, 65 und eine Durchbrechung 74 in der das Umlenksegment 52 bildenden Buchse 59 gesteckt. Die Schraube 69 ist durch eine Durchbrechung 75 in dem anderen Haltearm 57 gesteckt und in das Sackloch 71 mit einem Innengewinde der Gewindemuffe 67 eingeschraubt. Die Haltearme 56, 57 werden mittels des Anschlagflansches 68 und des Schraubenkopfes 70 auf die Klemmscheiben 64, 65 gepreßt.

In den Klemmscheiben 64, 65 können Führungen ausgebildet sein, die in das Umlenksegment 53 eingreifen. Hierzu können z.B. als Führungen Stege oder Zapfen 76 vorgesehen sein, die in Nuten oder Ausnehmungen 77 der Scheibe 61 eingreifen.

Der Wandhalter 58 besteht aus einem stabförmigen Grundkörper 78 mit rundem oder eckigem Querschnitt. An dessen einem Endabschnitt 79 sind die Haltearme 56, 57 mittels einer Schraubverbindung 80 so befestigt, daß sie um die Mittelachse 81 des Schraubbolzens 82 schwenkbar sind. An dem anderen Endabschnitt 83 ist der Grundkörper 78 mit einem Wandbefestigungsstück 84 kann aus einem Schraubenschaft 86 bestehen, der z.B. in einem Dübel in einer Wand 85 eingeschraubt wird. An dem Schraubenschaft 86 ist ein vorragender Zapfen 87 ausgebildet, der in eine Ausnehmung 88 des stabförmigen Grundkörpers 78 eingesteckt und mittels einer an dem Grundkörper 78 befindlichen Schraube 87 festgeklemmt werden kann.

Die Klemmscheiben 64, 65, die Umlenksegmente 52, 53, die Haltearme 56, 57 und der stabförmige Grundkörper 78 können aus Metall oder Kunststoff bestehen. Aus gestalterischen Gründen kann der Kunststoff auch transparent ausgebildet sein.

Je nach dem, welcher Umlenkwinkel für die Kabel 54 gewünscht wird, kann ein Umlenksegment 53 mit einem angepaßten Umlenkwinkel α zwischen die Klemmscheiben 64, 65 eingesetzt und so mit der Halteeinrichtung 55 verbunden werden. Hierdurch ist es möglich mit einfachen Mitteln z.B. Niederspannungs-Stromleiter über Räume verteilt auch im Winkel zueinander anzuordnen, ohne daß zusätzliche Transformatoren vorgesehen werden müssen.

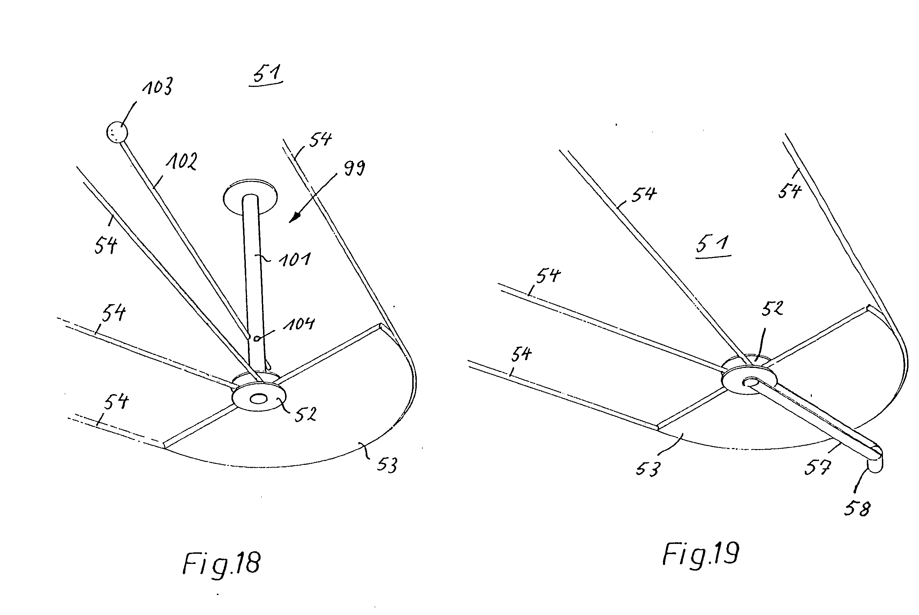

In Fig. 18 und 19 ist jeweils eine Haltevorrichtung 51 dargestellt, bei der die Umlaufsegmente 53 einen Umlaufwinkel α von 180° aufweisen. Während die Haltevorrichtung 51 nach Fig. 19 mittels eines Haltearms 57 mit einem Wandhalter 58 verbunden ist, ist das Umlenksegment 52 der Haltevorrichtung 51 nach Fig. 18 mit einem Deckenhalter 99 verbunden. Der Deckenhalter 99 besteht aus einem and der Decke zu befestigenden Distanzstab 101, der mittels eines Stützstabs 102 in Zugrichtung an der Decke abgestützt ist. Der Stützstab 102 liegt mit einem kugelförmigen Endstück 103 an der Decke an. Ferner ist der Stützstab 102 durch eine nicht näher dargestellte Durchbrechung in dem Distanzstab 101 geführt und kann mittels einer Klemmschraube 104 arretiert werden.

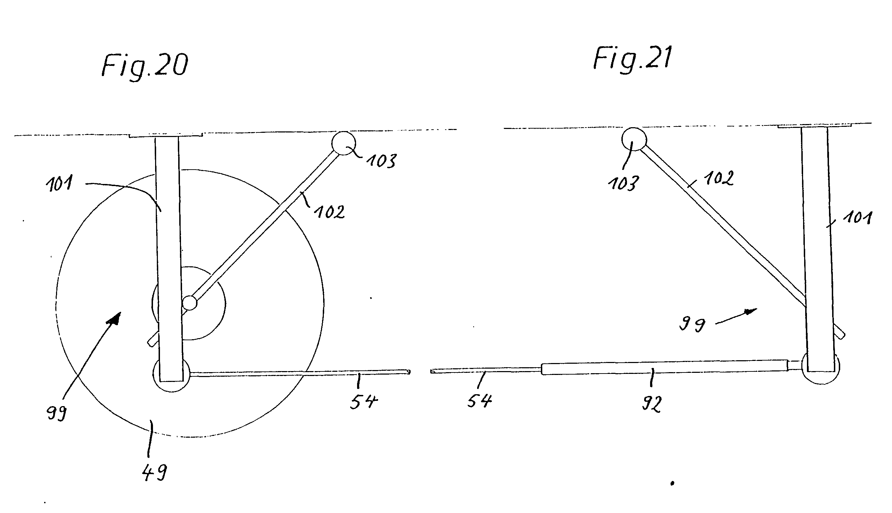

Es ist auch möglich, das Vorschaltgerät 49 und die Seilspanner 92 an Deckenhaltern 99 zu befestigen (Fig. 20 und 21). Das Vorschaltgerät 49 wird zweckmäßigerweise so ausgebildet, das es sowohl an den Stützstäben 102 wie auch gegebenenfalls den Seilspannern 92 befestigt werden kann.

## Patentansprüche

1. Leuchtenanordnung mit zwischen zwei Niederspannungs-Stromleitern (2, 3) angeordneten Leuchten (1), insbesondere Strahlern, wobei die parallel zueinander angeordneten als Seile, Kabel oder Drähte ausgebildeten Stromleiter durch Haltevorrichtungen (51) gehalten sind und die Leuchten mit den Stromleitern mittels zweier elektrisch leitender Tragstücke (12, 13) elektrisch leitend mittels an den Enden der Tragstücke ausgebildeter Haltestücke (16, 17) verbunden sind, dadurch gekennzeichnet, daß an der Lampenfassung (4) radial zu deren Längsachse (5) diametral einander entgegensetzt zwei Stromleitstäbe (6, 7) angeordnet sind, die innerhalb der Lampenfassung (4) mit den Kontakten (105) der Birne (9) und an ihren äußeren Endabschnitten (10, 11) gelenkig mit jeweils einem Ende der stabförmigen elektrisch leitenden Tragstücke (12, 13) verbunden sind, wobei die Haltestücke (16, 17) jeweils an den anderen Enden der Tragstücke (12, 13) so befestigt und mit den Stromleitern (2, 3) so verbindbar sind, daß die Tragstücke um Drehachsen (18) senkrecht zur Längsachse (19) der Stromleitstäbe (6, 7) schwenkbar sind, und daß eine Haltevorrichtung (51) zwei Umlenksegemente (52, 53) mit jeweils einer Führung für ein Seil, Kabel oder einen Draht umfaßt, die mittels einer Halteeinrichtung (55) miteinander verbunden sind und mittels eines Deckenhalters (99) oder mittels mindestens eines Haltearms (56, 57) gelenkig mit einem Wandhalter (58) verbunden sind.

2. Leuchtenanordnung nach Anspruch 1, dadurch gekennzeichnet, daß die Tragstücke (12, 13) als einen Winkel von 90° umfassende Kreisringsegmente (20, 21) ausgebildet sind.

3. Leuchtenanordnung nach Anspruch 1 und 2, dadurch gekennzeichnet, daß an dem in das Tragstück (12, 13) eingeführten Endabschnitte (22, 23) des Stromleitstabs (6, 7) eine Nut (24) ausgebildet ist, mit der eine in dem Tragstück (12, 13) angeordnete Schraube (25) in Wirkeingriff bringbar ist.

4. Leuchtenanordnung nach Anspruch 3, dadurch gekennzeichnet, daß in dem stirnseitigen dem Stromleitstab (6, 7) zugewandten Endabschnitt (26) des Tragstücks (12, 13) eine Gewindebohrung (27) ausgebildet ist, in die die Schraube (25) eingeschraubt ist.

5. Leuchtenanordnung nach Anspruch 1 bis 4, dadurch gekennzeichnet, daß in dem stirnseitigen dem Haltestück (16, 17) zugewandten Abschnitt (28) des Tragstücks (12, 13) eine Gewindebohrung (29) ausgebildet ist, in der eine Schraube (30) angeordnet ist, die an dem in das Tragstück (12, 13) geführten Lagerzapfen (31, 32) des Haltestücks (16, 17) zur Anlage bringbar ist.

6. Leuchtenanordnung nach Anspruch 5, dadurch gekennzeichnet, daß an dem Lagerzapfen (31, 32) eine Nut (33) ausgebildet ist, mit der die in der Gewindebohrung (29) befindliche Schraube (30) in Wirkeingriff bringbar ist.

7. Leuchtenanordnung nach Anspruch 1 bis 6, dadurch gekennzeichnet, daß das Haltestück (16, 17) aus einem Zylinder (34) besteht, an dessen einer Stirnseite (35) der Lagerzapfen (31) ausgebildet ist und in dem quer zur Längsachse (18) des Haltestücks (16, 17) eine Durchbrechung (36) derart ausgebildet ist, daß der dem Lagerzapfen (31) abgewandte Abschnitt (32) des Zylinders (34) als einseitig offenes Gabelstück (37) ausgebildet ist, dessen Öffnungsabschnitt (38) mittels eines Verschlußstücks (39) verschließbar ist.

8. Leuchtenanordnung nach Anspruch 7, dadurch gekennzeichnet, daß das Verschlußstück (39) als eine einen Gewindezapfen (41) aufweisende Verschlußkappe (40) ausgebildet ist.

9. Leuchtenanordnung nach Anspruch 1 bis 8, dadurch gekennzeichnet, daß die Strahlerfassung (42) mittels eines um die Lampenfassung (4) gelegten elastischen drahtförmigen Klemmbügels (43) festklemmbar ist.

10. Leuchtenanordnung nach Anspruch 9, dadurch gekennzeichnet, daß in der der Strahlerfassung (42) abgewandten Seite der Lampenfassung (4) Führungsnuten (44) zur Halterung des Klemmbügels (43) ausgebildet sind.

11. Leuchtenanordnung nach Anspruch 1, dadurch gekennzeichnet, daß in dem in die Lampenfassung (4) eingeführten Endabschnitt des Stromleitstabes (6, 7) eine Nut (45) ausgebidet ist, in die eine mit der Lampenfassung (4) verbundene Schraube oder ein Stift (46) eingeführt ist.

12. Leuchtenanordnung nach Anspruch 1, dadurch gekennzeichnet, daß die in die Lampenfassung (4) eingeführten Endabschnitte der Stromleitstäbe (6, 7) mit der Lampenfassung (4) durch Klebverbindungen verbunden sind.

13. Leuchtenanordnung nach Anspruch 11 und 12, dadurch gekennzeichnet, daß in den in die Lampenfassung (4) eingeführten Endabschnitten der Stromleitstäbe (6, 7) jeweils ein Sackloch (98) ausgebildet ist, in das ein Kontakt (105) der Birne (9) der Leuchte (1) eingeführt ist.

14. Leuchtenanordnung nach Anspruch 1 bis 13, dadurch gekennzeichnet, daß an den äußeren Endabschnitten (10, 11) der Stromleitstäbe (6, 7) eine um die Stromleitstäbe (6, 7) drehbare Haltebuchse (47) gelagert ist, die mit den Endabschnitten (26) der Tragstücke (12, 13) verbunden ist.

15. Leuchtenanordnung nach Anspruch 1, dadurch gekennzeichnet, daß das eine Umlenksegment (52) als Buchse (59) mit einer äußeren umlaufenden Nut (60) und das andere Umlenksegment (53) als kreissegmetförmige Scheibe (61) mit einer Nut (62) in der äußeren Bogenfläche (63) ausgebildet ist, die mittels Klemmscheiben (64, 65) miteinander verbunden sind, die mittels einer Schraubverbindung (66) an zwei Haltearmen (56, 57) befestigt sind.

16. Leuchtenanordnung nach Anspruch 15, dadurch gekennzeichnet, daß die Schraubverbindung (66) aus einer Gewindemuffe (67) mit Anschlagflansch (68) und einer in die Gewindemuffe (67) einschraubbaren Schraube (69) mit Schraubenkopf (70) besteht, daß die Gewindemuffe (67) durch eine Durchbrechung (72) des einen Haltearms (56), Durchbrechungen (73) in den Klemmscheiben (64, 65) und eine Durchbrechung (74) in der das eine Umlenksegment (52) bildenden Buchse (59) gesteckt ist, daß die Schraube (69) durch eine Durchbrechung (75) in dem anderen Haltearm (57) gesteckt ist und daß die Haltearme (56, 57) mittels des Anschlußflansches (68) und des Schraubenkopfes (70) auf die Klemmscheiben (64, 65) gepreßt sind.

17. Leuchtenanordnung nach Anspruch 15 und 16 dadurch gekennzeichnet, daß in den Klemmscheiben (64, 65) Führungen ausgebildet sind, die in das als kreissegment formige Scheibe (61) ausgebildete Umlenksegment (53) eingreifen.

18. Leuchtenanordnung nach Anspruch 17, dadurch gekennzeichnet, daß die Führungen als Stege oder Zapfen (76) ausgebildet sind, die in die Nuten oder Ausnehmungen (77) oder Durchbrechungen der Scheibe (61) eingreifen.

19. Leuchtenanordnung nach Anspruch 1, dadurch gekennzeichnet, daß der Wandhalter (58) aus einem stabförmigen Grudkörper (78) mit rundem oder eckigem Querschnitt besteht, an dessen einem Endabschnitt (79) die Haltearme (56, 57) mittels einer Schraubverbindung (80) um die Mittelachse (81) des Schraubbolzens (82) schwenkbar befestigt sind und dessen anderer Endabschnitt (83) mit einem Wandbefestigungsstück (84) verbunden ist.

20. Leuchtenanordnung nach Anspruch 19, dadurch gekennzeichnet, daß das Wandbefestigungsstuck (84) aus einem Schraubenschaft (86) und einem vorragenden Zapfen (87) besteht, der in eine Ausnehmung (88) des stabförmigen Grundkörpers (78) eingesteckt und mittels einer an dem Grundkörper (78) befindlichen Schraube (89) festgeklemmt ist.

21. Leuchtenanordnung nach Anspruch 1, dadurch gekennzeichnet, daß der Deckenhalter (99) aus einem mit der Decke verbindbaren Distanzstab (101) besteht, der mittels eines Stützstabs (102) in Zugrichtung der als Stromleiter (2, 3) dienenden Kabel (54) abgestützt ist.

22. Leuchtenanordnung nach Anspruch 15 bis 20, dadurch gekennzeichnet, daß die Klemmscheiben (64, 65) und/oder die Umlenksegmente (52, 53) und/oder die Haltearme (56, 57) und/oder der stabförmige Grundkörper (78) aus Metall oder Kunststoff bestehen.

23. Leuchtenanordnung nach Anspruch 22, dadurch gekennzeichnet, daß der Kunststoff transparent ist.

**Revendications**

1. Dispositif d'éclairage comportant, disposées entre deux conducteurs à basse tension (2, 3), des lampes (1), en particulier des projecteurs, les conducteurs disposés parallèlement l'un par rapport à l'autre et réalisés sous forme de câbles, de cordes ou de fils, étant tenus en place par des dispositifs de maintien (51) et les lampes étant reliées aux conducteurs au moyen de deux éléments supports (12, 13) électriquement conducteurs et connectées électriquement au moyen d'éléments supports (16, 17) façonnés sur les extrémités desdits éléments supports, caractérisé par le fait que sur la monture de lampe (4) sont disposées deux baguettes conductrices (6, 7) diamétralement opposées l'une à l'autre et radialement à l'axe longitudinal (5) de la monture de lampe, ces baguettes conductrices étant reliées à l'intérieur de la monture de lampe (4) aux contacts (105) de l'ampoule (9) et sur leurs sections terminales extrêmes (10, 11) articulées sur respectivement une extrémité des éléments supports (12, 13) électriquement conducteurs, les éléments de maintien (16, 17) étant fixés sur les extremités des éléments supports (12, 13) et pouvant être connectés de manière à ce que les éléments supports puissent pivoter autour des axes de rotation (18), perpendiculairement à l'axe longitudinal (19) des baguettes conductrices (6, 7), et par le fait qu'un dispositif de maintien (51) comprend deux segments de déviation (52, 53) comportant respectivement un guidage pour une corde, un câble ou un fil, lesdits segments étant reliés l'un à l'autre au moyen d'un dispositif support (55) et reliés de manière articulée à un support mural (58) au moyen d'un support au plafond (99) ou au moyen d'au moins un bras support (56, 57).

2. Arrangement de lampe selon la revendication 1, caractérisé par le fait que les éléments support (12, 13) sont réalisés sous forme de segments circulaires (20, 21) renfermant un angle de 90°.

3. Arrangement de lampe selon les revendications 1 et 2, caractérisé par le fait que sur les sections terminales (22, 23) de la baguette conductrice (6, 7) introduites dans l'élément support (12, 13) est pratiquée une gorge (24) avec laquelle peut venir en prise une vis (25) disposée dans l'élément support (12, 13).

4. Arrangement de lampe selon la revendication 3, caractérisé par le fait que dans la section terminale (26) de l'élément support (12, 13), orientée frontalement vers la baguette conductrice (6, 7), est pratiqué un trou fileté (27) dans lequel la vis (25) est vissée.

5. Arrangement de lampe selon les revendications 1 à 4, caractérisé par le fait que dans la section (28) de l'élément support (12, 13), orientée frontalement vers l'élément de maintien (16, 17) est pratiqué un trou fileté (29) dans lequel est disposée une vis (30) qui peut venir en application sur le tourillon (31, 32) de l'élément de maintien (16, 17), tourillon qui pénètre dans l'élément support (12, 13).

6. Arrangement de lampe selon la revendication 5, caractérisé par le fait que sur le tourillon (31, 32) est pratiquée une gorge (33) avec laquelle peut venir en prise la vis (30) se trouvant dans le trou fileté (29).

7. Arrangement de lampe selon les revendications 1 à 6, caractérisé par le fait que l'élément de maintien (16, 17) est constitué d'un cylindre (34) sur un côté frontal (35) duquel est façonné le tourillon (31) et à l'intérieur duquel, transversalement à l'axe longitudinal (18) de l'élément de maintien (16, 17), est pratiquée une fente (36) de telle sorte que la section (32) du cylindre (34) opposée au tourillon (31) est réalisée sous forme d'une fourche (37) ouverte d'un côté dont la section d'ouverture (38) peut être fermée par une pièce d'obturation (39).

8. Arrangement de lampe selon la revendication 7, caractérisé par le fait que la pièce d'obturation (39) est réalisée en forme de capuchon obturateur (40) muni d'un tourillon fileté (41).

9. Arrangement de lampe selon les revendications 1 à 8, caractérisé par le fait que la monture du projecteur (42) peut être encliquetée de manière fixe au moyen d'un étrier d'encliquetage (43) filiforme, élastique, placé autour de la monture de lampe (4).

10. Arrangement de lampe selon la revendication 9, caractérisé par le fait que dans la face de la monture de projecteur (42) opposée à la monture de lampe (4) sont pratiquées des gorges de guidage (44) destinées à maintenir l'étrier (43).

11. Arrangement de lampe selon la revendication 1, caractérisé par le fait que dans la section terminale de la baguette conductrice (6, 7) introduite dans la monture de lampe (4) est pratiquée une gorge (45) dans laquelle est insérée une vis ou une tige (46) reliée à la monture de lampe (4).

12. Arrangement de lampe selon la revendication 1, caractérisé par le fait que les sections terminales des baguettes conductrices (6, 7) introduites dans la monture de lampe (4) sont reliées à ladite monture de lampe (4) par collage.

13. Arrangement de lampe selon les revendications 11 et 12, caractérisé par le fait que dans les sections terminales des baguettes conductrices (6, 7) introduites dans la monture de lampe (4) est conformé respectivement un trou borgne (98) dans lequel est introduit un contact (105) de l'ampoule (9) de la lampe (1).

14. Arrangement de lampe selon les revendications 1 à 13, caractérisé par le fait que sur les sections terminales extérieures (10, 11) des baguettes conductrices (6, 7) est montée une douille de maintien (47) pouvant tourner autour desdites baguettes conductrices (6, 7), ladite douille étant reliée aux sections terminales (26) des éléments de support (12, 13).

15. Arrangement de lampe selon la revendication 1, caractérisé par le fait que l'un des segments de déviation (52) est réalisé en forme de douille (59) comportant une gorge extérieure périphérique (60) et l'autre segment de déviation (53) est réalisé sous forme d'un disque segmenté (61) comportant une rainure (62) sur sa face arquée extérieure (63), ces deux segments étant reliés l'un à l'autre par des rondelles de serrage (64, 65) lesquelles sont fixées sur deux bras supports (56, 57) au moyen d'un boulon (66).

16. Arrangement de lampe selon la revendication 15, caractérisé par le fait que le boulon (66) est constitué d'un manchon fileté (76) à bride de butée (68) et d'une vis (69) pouvant être vissée dans ledit manchon (67) et munie d'une tête de vis (70), par le fait que ledit manchon fileté (67) est inséré à travers une fente (72) de l'un des bras supports (56) des fentes (73) pratiquées dans les rondelles de serrage (64, 65) et une fente (74) dans laquelle est introduite la douille (59) constituant l'un des segments de déviation (52), par le fait que la vis (69) est introduite à travers une fente (75) dans l'autre bras support (57) et que les bras supports (56, 57) sont serrés sur les rondelles de fixation (64, 65) au moyen de la bride (68) et de la tête de vis (70).

17. Arrangement de lampe selon les revendications 15 et 16, caractérisé par le fait que dans les rondelles de fixation (64, 65) sont réalisés des guidages qui viennent en prise dans le segment de déviation (53) réalisé sous forme de disque segmenté (61).

18. Arrangement de lampe selon la revendication 17, caractérisé par le fait que les guidages sont réalisés en forme de barrettes ou de tourillons (76) qui viennent en prise dans les gorges ou les évidements (77) ou des fentes du disque (61).

19. Arrangement de lampe selon la revendication 1, caractérisé par le fait que le support mural (58) est constitué d'un corps de base (78) en forme de barre à section ronde ou angulé, sur une section terminale (79) duquel les bras supports (56, 57) sont fixés de manière à pouvoir pivoter autour de l'axe central (81) de la tige filetée (82) au moyen d'un boulon (80) et leur deuxième section terminale (82) étant reliée à un élément de fixation murale (84).

20. Arrangement de lampe selon la revendication 19, caractérisé par le fait que l'élément de fixation murale (84) est constitué d'une tige filetée (86) et d'un tourillon émergeant (87) qui est introduit dans un évidement (88) du corps de base (78) en forme de barre) et fixé en place au moyen d'une vis (89) se trouvant sur le corps de base (78).

21. Arrangement de lampe selon la revendication 1, caractérisé par le fait que le support au plafon (99) est constitué d'une barre d'écartement (101) pouvant être reliée au plafond, laquelle est renforcée au moyen d'une barre d'appui (102) en direction de la traction des câbles (54) servant de conducteurs (2, 3).

22. Arrangement de lampe selon les revendications 15 à 20, caractérisé par le fait que les rondelles de fixation (64, 65) et/ou les segments de déviation (52, 53) et/ou les bras supports (56, 57) et/ou le corps de base (78) sont en métal ou en matière synthétique.

23. Arrangement de lampe selon la revendication 22 caractérisé par le fait que la matière synthétique est transparente.

## Claims

1. Lighting system with lamps (1), in particular projectors, arranged between two low-voltage conductors (2, 3), whereby conductors provided for example as ropes, cables or wires are parallel arranged and fixed by means of holding devices (51), and lamps are connected to conductors by means of two electrically conductive bar-shaped supports (12, 13), by means of fixtures (16, 17) arranged at the end of supports, characterized in that two current carrying bars (6, 7) are diametrically arranged at the lamp holder (4) radially to its longitudinal axis (5), connected to contacts (105) of the bulb (9) inside the lamp holder (4) being pivotally connected at their outer end sections (10, 11) in each case to one end of one electrically conducting bar-shaped support (12, 13) in the course of which in each case the fixtures (16, 17) are fastened at the other end of bar-shaped support (12, 13) and connected to the conductors (2, 3) in such a way that the supports are swivellable around swivelling axis (18) vertically arranged to longitudinal axis (19) of current-carrying bars (6, 7), and that one holding device (51) comprises two deviation segments (52, 53) with a guidance for a rope, cable or a wire being interconnected by means of a holding device (55) and being pivoted to a wall support (58) by means of a ceiling support (99) or by means of at least one supporting arm (56, 57).

2. Lighting system according to claim 1, characterized in that supports (12, 13) are provided as circular ring segments (20, 21) having an angle of 90°.

3. Lighting system according to claim 1 and 2, characterized in that a groove (24) is provided at the end sections (22, 23) of the current-carrying bar (6, 7) inserted in support (12, 13), engaged with a screw (25) arranged in support (12, 13).

4. Lighting system according to claim 3, characterized in that a threaded hole (27) is provided at the front end section (26) of support (12, 13) arranged towards the current-carrying bar (6, 7), in which a screw (25) is inserted.

5. Lighting system according to claim 1 to 4, characterized in that a threaded hole (29) is provided in the front section (28) of support (12, 13) arranged towards the fixture (16, 17), in which a screw (30) is arranged, which can be put against the bearing journal (31, 32) of the fixture (16, 17) inserted in the support (12, 13).

6. Lighting system according to claim 5, characterized in that a groove (33) is provided at the bearing journal (31, 32), engaged with the screw (30) arranged in threaded hole (29).

7. Lighting system according to claim 1 to 6, characterized in that the fixture (16, 17) provides a cylinder (34) with a bearing journal (31) at one front (35) and an opening (36) crosswise to longitudinal axis (18) of fixture (16, 17) in such a manner that the section (32) of cylinder (34), opposite to bearing journal (31), is provided as fork-shaped piece (37) with an opening section (38) which can be closed by means of a closing member (39).

8. Lighting system according to claim 7, characterized in that the closing member (39) is provided as a closing cap (40) with a threaded journal (41).

9. Lighting system according to claims 1 to 8, characterized in that projector holder (42) can be clamped by means of a flexible wire clap bow (43) arranged around lamp holder (4).

10. Lighting system according to claim 9, characterized in that guiding grooves (44) for fixing the clamp bow (43) are provided at that side of lamp holder (4) which is opposite to projector holder (42).

11. Lighting system according to claim 2, characterized in that a groove (45) is provided in the end section of current-carrying bar (6, 7) inserted in the lamp holder (4), in which a screw or a pin (46) connected to the lamp holder (4) is inserted.

12. Lighting system according to claim 1, characterized in that end sections of current-carrying bars (6, 7) inserted in lamp holder (4) are connected to lamp holder (4) by means of adhesive joints.

13. Lighting system according to claim 11 and 12, characterized in that a blind hole (98) is provided in each end section of current-carrying bars (6, 7) inserted in lamp holder (4), in which a contact (105) of the bulb (9) of lamp (1) is inserted.

14. Lighting system according to claims 1 to 13, characterized in that a holding brush (47) is arranged at the outer end sections (10, 11) of current-carrying bars (6, 7), which can be rotated around the current-carrying bars (6, 7), connected to end sections (26) of supports (12, 13).

15. Lighting system according to claim 1, characterized in that one deviation segment (52) is provided as a bush (59) with an outer circulating groove (60), and the other deviation segment (53) is provided as a disk segment (61) with a groove (62) in the outer arc area (63), both are interconencted by means of clamping plates (64, 65), which are fixed at two supporting arms (56, 57) by means of a screw connection (66).

16. Lighting system according to claim 15, characterized in that screw connection (66) comprises a threaded sleeve (67) with stop flange (68) and a screw (69) with screw head (70) which can be screwed in threaded sleeve (67), that threaded sleeve (67) is passed through an opening (72) of one supporting arm (56), through openings (73) in clamping plates (64, 65) and through an opening (74) in bush (59) which is the deviation segment (52), that screw (69) is inserted in an opening (75) in the other supporting arm (57), and that supporting arms (56, 57) are pressed against clamping plates (64, 65) by means of stop flange (68) and screw head (70).

17. Lighting system according to claims 15 and 16, characterized in that guiding devices are arranged in the clamping plates (64, 65) that interlock in the deviation segment (53) which is provided as disk segment (61).

18. Lighting system according to claim 17, characterized in that guiding devices are provided in the form of webs or pins (76), which interlock in the grooves or openings (77) respectively, formed in the disk segment (61).

19. Lighting system according to claim 1, characterized in that the wall support (58) having a bar-shaped basic body (78) with a circular or cornered cross section and an end section (79) at which supporting arms (56, 57) are rotatably arranged around the center axis (81) of threshold bolt (82) by means of a screw connection (80), and whose other end section (83) is connected to a wall support (84).

20. Lighting system according to claim 19, characterized in that wall support (84) is provided with a screw shank (86) and a projecting pin (87) inserted in an opening (88) of the bar-shaped basic body (78) and clamped by means of a screw (89) arranged at basic body (78).

21. Lighting system according to claim 1, characterized in that ceiling support (99) having a distance bar (101) connectable to the ceiling, supported by means of supporting bar (102) at the ceiling in pull direction of cables (54) used as conductors (2, 3).

22. Lighting system according to claims 15 to 20, characterized in that clamping plates (64, 65) and/or deviation segments (52, 53) and/or supporting arms (56, 57) and/or the bar-shaped basic body (78) are made of metal or plastics.

23. Lighting system according to claim 22, characterized in that the plastics are transparent.

Fig.1

Fig.2

Fig.5

Fig.3a

Fig.3c

Fig.3b

Fig.3d

Fig.4a

Fig.4b

2

Fig. 7

Fig. 6

Fig. 8

Fig. 9

Fig. 10

Fig.12

Fig.13

Fig.11

Fig.14

Fig.15

Fig.16

Fig.17

6

Fig.19

Fig.18

Fig.20

Fig.21

EP 0 285 627 B1